# EUROPEAN PATENT APPLICATION

(11) **EP 4 846 844 A1**
(43) Date of publication of application: **02.12.2026**
(21) Application number: 26173683.9
(22) Date of filing: 21.04.2026
(51) Int. Cl.: A01M 7/00

(54) **TANK AND METHOD OF PROMOTING MIXING IN SUCH**

(30) Priority: 29.05.2025 US 202563813805 P; 26.03.2026 US 202619629335
(71) Applicant: Deere & Company, Moline, IL 61265 (US)
(72) Inventor: MUKHOPADHYAY, SOURABH, 68163 Mannheim (DE); ENGELBRECHT, JOSHUA J, 68163 Mannheim (DE); WILLIAMS, DAVID L, 68163 Mannheim (DE); REDDY, SRINIVAS, 68163 Mannheim (DE); ROMERO, CHRISTOPHER, 68163 Mannheim (DE); GONÇALVES, VITOR, 68163 Mannheim (DE); RAO, SRINIVASAKUMAR, 68163 Mannheim (DE)
(74) Representative: Reichert, Christian

(57) **Abstract**

A tank is disclosed. The tank (100, 200) is operable to mix a liquid agricultural product (90), the tank (100, 200) comprising: a reservoir (110, 210) configured to hold the liquid agricultural product (90), the reservoir (110, 210) comprising a floor (112, 212) and one or more sidewalls (114) rising from the floor (112, 212); a nozzle (120, 220) positioned at least partially in the reservoir (110, 210), wherein the nozzle (120, 220) comprises a flow director (122, 222) pointing toward the floor (112, 212); and a pump (130) operable to direct liquid agricultural product (90) to the reservoir (110, 210) via the nozzle (120, 220) to thereby cause liquid agricultural product (90) discharged via the nozzle (120, 220) to flow toward the floor (112, 212). A method of promoting mixing in such a tank (100, 200) is disclosed.

## Description

### TECHNICAL FIELD

The present disclosure generally relates to holding tanks having agitation devices, and more particularly but not exclusively relates to agricultural holding tanks including improved agitation devices configured to discourage sedimentation in the tank.

### BACKGROUND

Liquid agricultural products are often stored in a holding tank that is carried on a work machine for distribution of the agricultural product. Certain forms of liquid agricultural product are provided in the form of a suspension in which solid particulate matter (e.g., copper oxychloride) is entrained in a liquid carrier. One issue that can arise with suspensions is the settling of particulate matter on the floor of the tank, which can result in variability in the concentration of the suspension being dispersed. Although certain existing holding tanks include agitation mechanisms to stir the liquid in an attempt to maintain homogeneity of the dispensed suspension, existing agitation mechanisms may suffer from certain drawbacks and/or limitations, such as inefficacy in promoting homogeneity. For these reasons among others, there remains a need for further improvements in this technological field.

### SUMMARY

Certain embodiments of the present application relate to a tank operable to mix a liquid agricultural product, the tank comprising: a reservoir configured to hold the liquid agricultural product, the reservoir comprising a floor and one or more sidewalls rising from the floor; a nozzle positioned at least partially in the reservoir, wherein the nozzle comprises a flow director pointing toward the floor; and a pump operable to direct liquid agricultural product to the reservoir via the nozzle to thereby cause liquid agricultural product discharged via the nozzle to flow toward the floor.

In certain embodiments, a line extending from the nozzle in a discharge direction intersects the floor at an incidence angle; and wherein the incidence angle is between 15° and 75°.

In certain embodiments, the floor comprises a sump; and wherein the flow director points toward the sump.

In certain embodiments, the floor comprises an upper level and a sump extending below the upper level; and wherein the flow director points toward the upper level.

In certain embodiments, the pump is operable to receive liquid agricultural product from the reservoir via a return port; and wherein the flow director points away from the return port.

In certain embodiments, the floor comprises a sump defining a lowest area of the floor; and wherein the return port is positioned within the sump.

In certain embodiments, the tank further comprises a propeller operable to induce a flow of liquid agricultural product within the reservoir to thereby promote mixing of the liquid agricultural product.

In certain embodiments, the propeller is configured to induce the flow of liquid agricultural product toward the floor.

In certain embodiments, the tank further comprises a pair of propellers, each operable to induce a flow of liquid agricultural product toward the floor to thereby promote mixing of the liquid agricultural product.

In certain embodiments, a distance between an outlet of the flow director and the floor is less than 5 cm.

Certain embodiments of the present application relate to a method of promoting mixing in a reservoir holding a liquid agricultural product comprising particulate matter, the method comprising: discharging liquid agricultural product through a nozzle that points toward a floor of the reservoir, thereby causing the discharged liquid agricultural product to strike the floor and discourage settling of particulate matter on the floor.

In certain embodiments, the method further comprises operating a propeller within the reservoir to thereby flow liquid downward and toward the floor.

In certain embodiments, the floor comprises a sump; and wherein causing the discharged liquid agricultural product to strike the floor comprises causing the liquid to strike the sump.

In certain embodiments, the method further comprises directing liquid agricultural product from the reservoir to a pump via a return port of the reservoir; wherein the pump charges liquid agricultural product to the nozzle.

In certain embodiments, the nozzle points away from the return port.

In certain embodiments, a distance between the floor and an outlet of the nozzle is 5 cm or less.

In certain embodiments, a line extending along a discharge direction of the nozzle intersects the floor at an oblique angle.

Certain embodiments of the present application relate to a tank operable to mix a liquid agricultural product, the tank comprising: a reservoir configured to hold the liquid agricultural product, the reservoir comprising: a floor; one or more sidewalls rising from the floor; and a return port formed in the floor; and a plurality of agitation nozzles, wherein each agitation nozzles comprises a corresponding flow director extending along and defining a discharge direction for the agitation nozzle; wherein, for at least one of the agitation nozzles, the discharge direction intersects the floor; and wherein, for one or more of the agitation nozzles, the discharge direction points away from the return port. In certain embodiments, the at least one of the agitation nozzles comprises the one or more agitation nozzles.

In certain embodiments, the tank further comprises a propeller configured to direct liquid agricultural product toward the floor.

In certain embodiments, the floor defines a sump, and wherein, for the at least one of the agitation nozzles, the discharge direction intersects the sump.

In certain embodiments, for the at least one of the agitation nozzles, the discharge direction intersects the floor at an oblique incidence angle.

In certain embodiments, the oblique incidence angle is between 15° and 75°, inclusive.

In certain embodiments, a distance measured along the discharge direction between the floor and an outlet of the at least one of the agitation nozzles is 5 cm or less.

Further forms, features, and aspects of the present application shall become apparent from the description and figures provided herewith.

### BRIEF DESCRIPTION OF THE FIGURES

Fig. 1 is a perspective illustration of a holding tank according to certain forms.
Fig. 2 is a partial cutaway view of the holding tank.
Fig. 3 is a partial cutaway view of the holding tank.
Fig. 4 is a schematic representation of fluid flow in the holding tank.
Fig. 5 is a plan view illustrating the arrangement of agitation nozzles in the holding tank.
Fig. 6 is a perspective illustration of a holding tank including agitation nozzles arranged in another configuration.
Fig. 7 illustrates the concentration of particulate matter along the floor of a conventional holding tank during operation of the conventional holding tank.
Fig. 8 illustrates the concentration of particulate matter along the floor of the holding tank illustrated in Figs. 1-5 during operation of the illustrated holding tank.
Fig. 9 illustrates the concentration of particulate matter along the floor of the holding tank illustrated in Fig. 6 during operation of the illustrated holding tank.

### DETAILED DESCRIPTION OF ILLUSTRATIVE FORMS

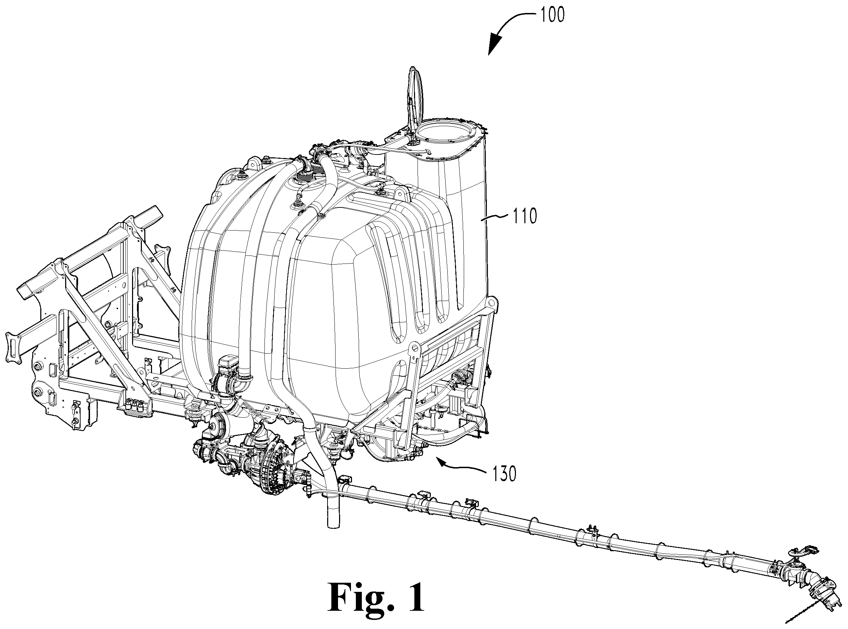

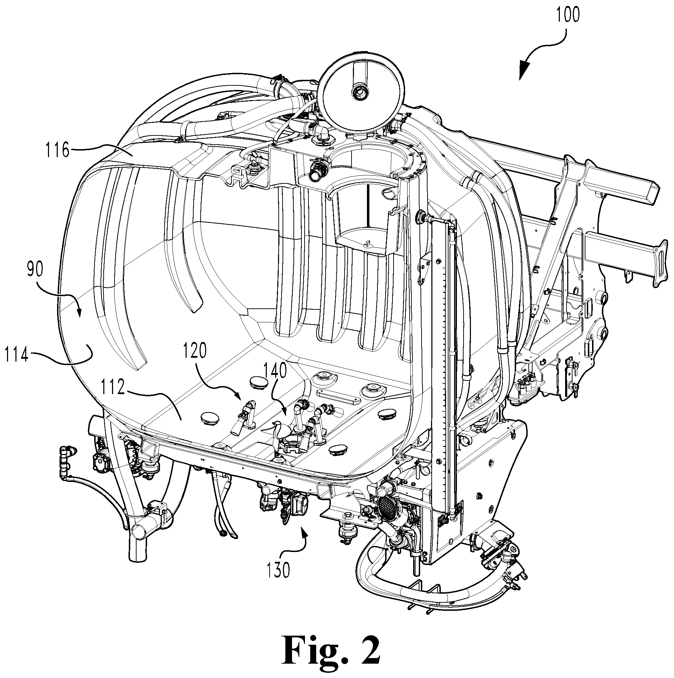

With reference to Figs. 1-3, illustrated therein is an agricultural holding tank 100 according to certain forms. The tank 100 generally includes a reservoir 110 having a floor 112, one or more agitation nozzles 120 pointing toward the floor 112, and a pump 130 operable to discharge liquid to the reservoir 110 via the one or more agitation nozzles 120. As described herein, the illustrated tank 100 further includes a propeller 140 operable to flow liquid within the tank 100 in a downward direction.

The reservoir 110 is operable to hold liquid 90, and generally includes a floor 112 and one or more sidewalls 114 rising up from the floor 112 to a ceiling 116. The floor 112 is generally horizontal, and may be sloped toward a return port 118 through which liquid 90 can be directed from the reservoir 110 to the pump 130. In the illustrated form, the floor 112 includes an upper level 112' and a sump 113. The sump 113 is a pit defining the lowest area of the floor 112, and may aid in directing liquid toward the return port 118.

For example, the return port 118 may be positioned in the sump 113, and the floor of the sump 113 may be angled toward the return port 118.

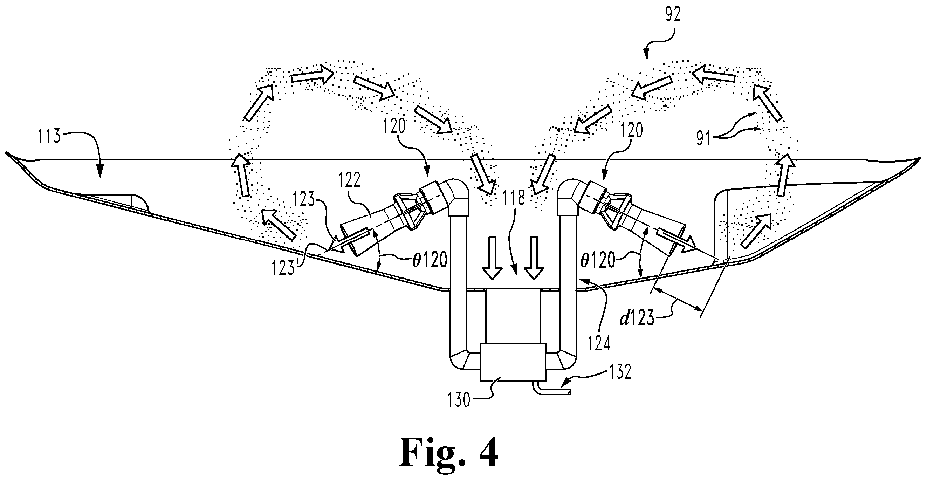

The tank 100 includes at least one agitation nozzle 120, and in the illustrated form includes a plurality of agitation nozzles 120. While the illustrated tank 100 includes four agitation nozzles 120, it is also contemplated that more or fewer agitation nozzles 120 may be utilized. Each nozzle 120 generally includes a flow director 122 and a pipe 124 configured to direct liquid 90 from the pump 130 to the flow director 122. The flow director 122 extends along and defines an outflow direction 123 for the liquid 90. As described herein, one or more of the nozzles 120 point toward the floor 112 such that a line 123' (Fig. 4) extending along the outflow direction 123 intersects the floor 112.

The pump 130 is in fluid communication with the return port 118 and the nozzles 120, and is operable to charge liquid 90 from the return port 118 to the nozzles 120. While other forms are contemplated, in the illustrated form, the pump 130 is positioned below the reservoir 110. In certain forms, the pump 130 may be operable to direct liquid from the return port 118 to a distribution line 132, for example to be distributed by the work machine. It is also contemplated that plural pumps may be utilized. For example, one pump may be dedicated to recirculation while another pump is dedicated to distribution. The propeller 140 is configured to induce a flow of liquid within the reservoir 110. In certain forms, the propeller 140 may be configured to induce an upward flow of liquid 90 (i.e., in a direction toward the ceiling 116). In the illustrated form, however, the propeller 140 is configured to induce a downward flow of liquid 90 (i.e., in a direction toward the floor 112). As described herein, this downward-directed propeller 140 may cooperate with the nozzles 120 to improve mixing in the reservoir 110.

With additional reference to Fig. 4, as noted above, the flow director 122 for one or more of the nozzles 120 points toward the floor 112 such that a line 123' extending along the outflow direction 123 intersects the floor 112. More particularly, the line 123' intersects the floor 112 to thereby define an incidence angle θ120 for the nozzle 120. In certain forms, the flow director 122 for one or more nozzles 120 may be substantially perpendicular to the floor 112 such that the incidence angle θ120 is about 90° (e.g., between 75° and 90°). It is also contemplated that the incidence angle θ120 may be a significantly oblique incidence angle, such as between 15° and 75°. It has been found that oblique incidence angles may aid in promoting recirculation within the reservoir 110.

In the illustrated form, the incidence angles θ120 for the two illustrated nozzles 120 cooperate with the geometry of the sump 113 to promote a recirculating flow 92 of liquid 90. Liquid 90 exiting the nozzles 120 quickly strikes the floor 112 and thereby agitates any particulate matter 91 (e.g., particulate copper oxychloride) that may have settled there as sediment. This particulate matter 91 then becomes entrained in the fluid flow, which is directed upward by the geometry of the sump 113 to further mix with the remaining liquid 90 in the reservoir 110. The downward thrust imparted by the propeller 140 may further facilitate this mixing. The mixed liquid 90 then flows to the return port 118 to be returned to the pump 130 for distribution and/or further mixing.

As noted above, it has been found that oblique incidence angles may aid in promoting recirculation of the liquid 90. One or more additional or alternative parameters may be selected to further promote recirculation and/or mixing of the liquid 90. For example, the distance of the line 123' from the end of the flow director 122 to the point of intersection with the floor 112 may be selected to be relatively low to discourage flow dissipation. In certain forms, the distance d123 between the outlet of the flow director 122 and the floor 112 may be 10 centimeters or less, 5 centimeters or less, or 2 centimeters or less.

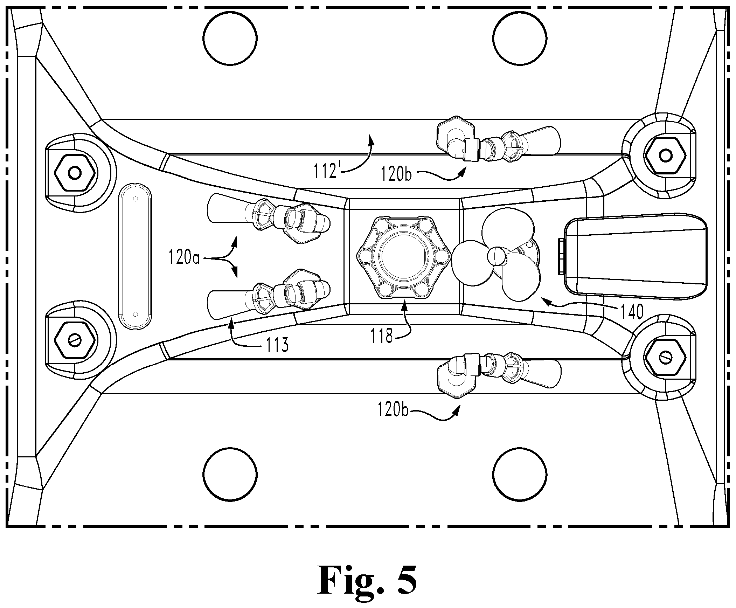

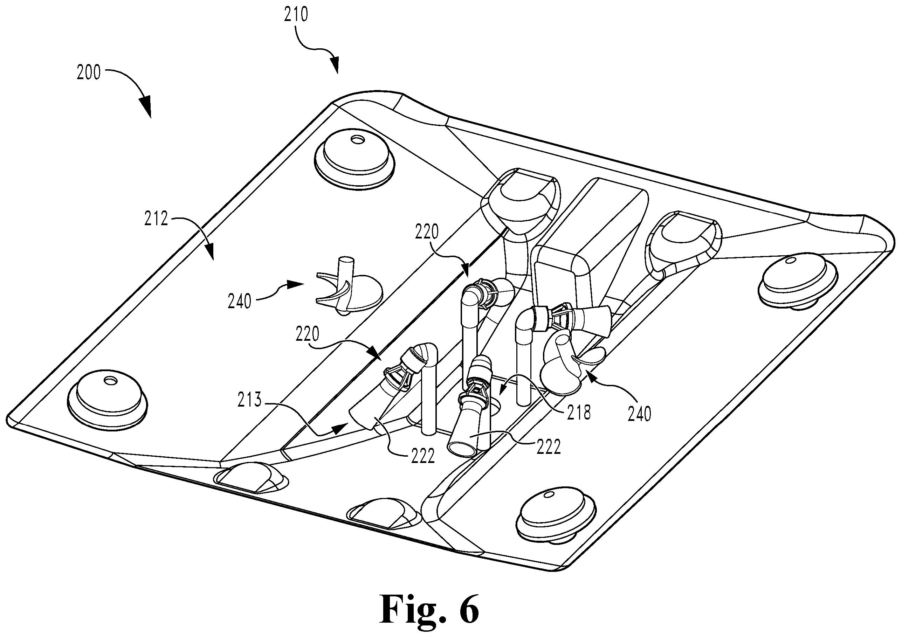

With additional reference to Fig. 5, as noted above, the illustrated tank 100 includes four agitation nozzles 120. Two of the nozzles 120a are positioned within the sump 113, and two of the nozzles 120b are positioned at the upper level 112'. For the sump nozzles 120a, the flow directors 122 are pointed toward the floor of the sump 113 and away from the return port 118. The flow directors 122 of the upper nozzles 120b are likewise pointed away from the return port 118, but are pointed toward the upper level 112'. While one example arrangement for the agitation nozzles 120 is illustrated, it should be understood that other arrangements are contemplated, such as that illustrated in Fig. 6. With additional reference to Fig. 6, illustrated therein is a portion of a tank 200 in which the nozzles 220 are provided in a different configuration. The tank 200 is similar to the above-described tank 100, and similar reference characters are used to indicate similar elements and features. For example, the tank 200 generally includes a reservoir 210, a set of agitation nozzles 220, a pump, and one or more propellers 240, which respectively correspond to the reservoir 110, agitation nozzles 120, pump 130, and propeller 140 described above. In the interest of conciseness, the following description of the tank 200 focuses primarily on features that are different from those described above with reference to the tank 100.

In the arrangement illustrated in Fig. 6, each of the nozzles 220 is positioned within the sump 213. Moreover, each of the flow directors 222 points away from the return port 218 and toward the floor 212. In the illustrated form, the tank 200 includes two propellers 240, each configured to generate a downward flow of liquid that flows toward the floor 212. In certain forms, the recirculating flow features described herein may facilitate the use of a smaller propeller 240 with a lower power requirement.

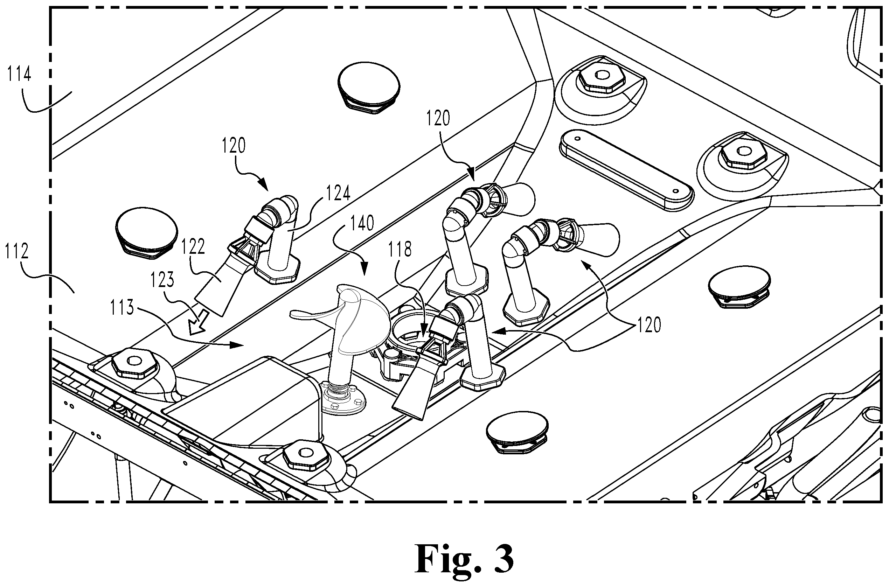

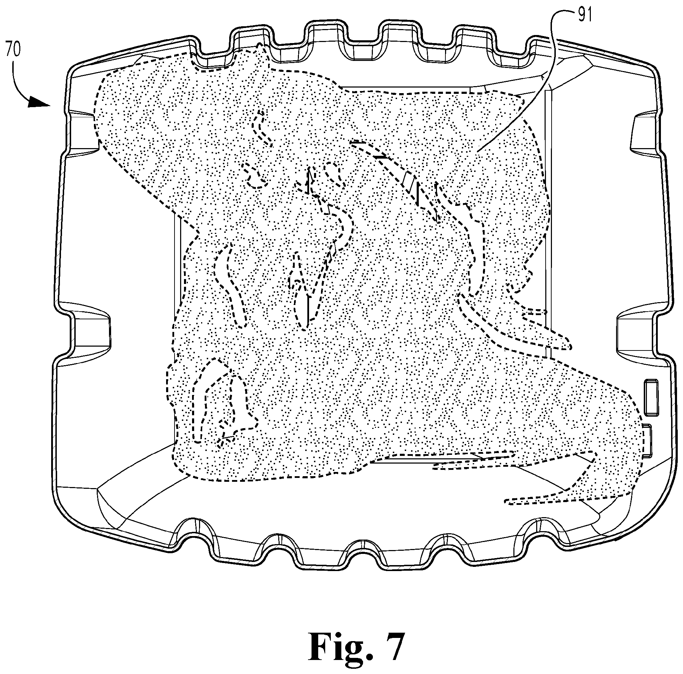

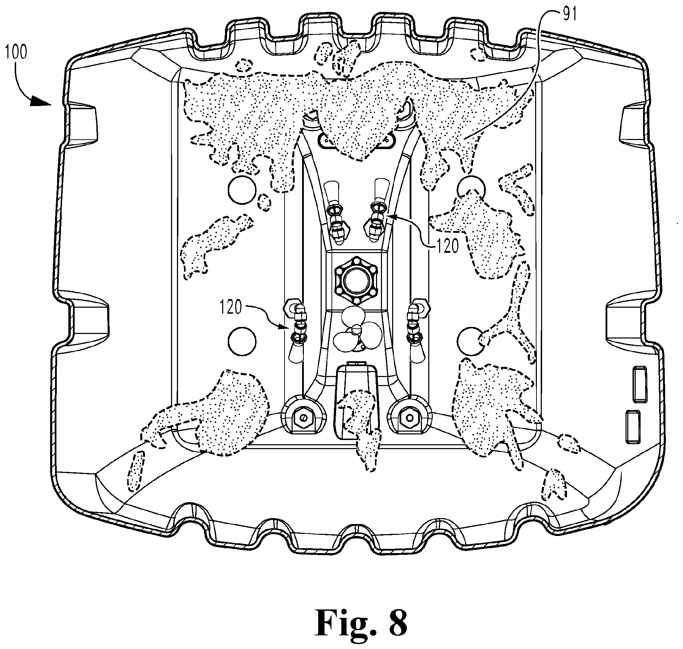

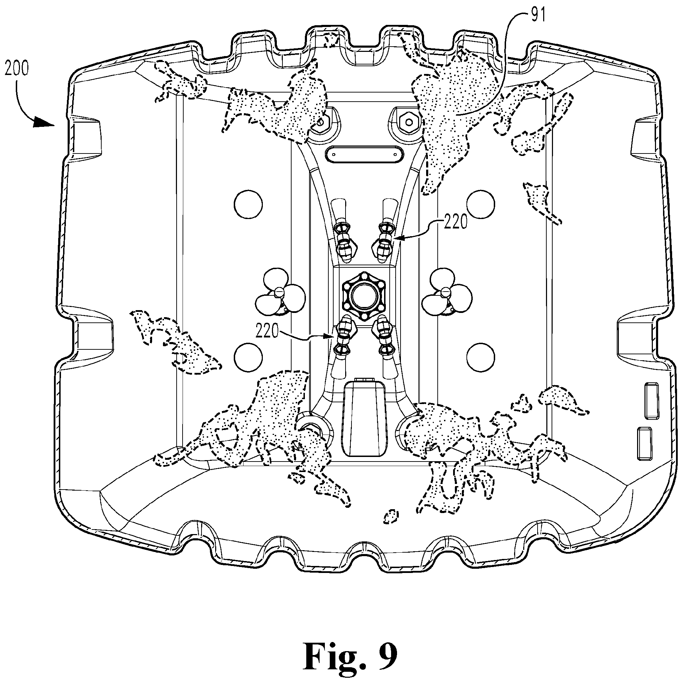

With additional reference to Figs. 7-9, illustrated therein are diagrams illustrating the concentration of particulate matter 91 along the floor for three different configurations of a tank. Fig. 7 illustrates a conventional tank 70, in which agitation nozzles are provided at conventional upward-facing angles, along with the concentration of particulate matter 91 along the floor 71 of the tank 70 during operation of the tank 70. Fig. 8 illustrates the concentration of particulate matter 91 along the floor 112 of the above-described tank 100 during operation of the tank 100, in which the nozzles 120 are arranged as illustrated in Figs. 3-5. Similarly, Fig. 9 illustrates the concentration of particulate matter 91 along the floor 212 of the above-described tank 200 during operation of the tank 200, in which the nozzles 220 are arranged as illustrated in Fig. 6.

As should be evident, each of the illustrated forms 100, 200 provides for a lesser concentration of particulate matter 91 at the bottom of the tank, which is indicative of improved mixing. For example, the segregation index (standard deviation) may be relatively high (e.g., about 34%) for the conventional tank 70, while the illustrative tanks 100, 200 may have relatively low segregation indices (e.g., on the order of 4%). This reduction in segregation index may aid in meeting ISO criteria, which standardizes a segregation index of 15% or lower. In addition or as an alternative to reducing the segregation index, the features described herein may reduce the volume fraction of particulate matter 91 at the tank outlet. For example, tests on certain forms of the illustrated tanks 100, 200 have shown a reduction from about 80% for the conventional tank 70 to about 3% for the illustrated tanks 100, 200 due to improved mixing across the entire volume.

## Claims

1. A tank (100, 200) operable to mix a liquid agricultural product (90), the tank (100, 200) comprising:
a reservoir (110, 210) configured to hold the liquid agricultural product (90), the reservoir (110, 210) comprising a floor (112, 212) and one or more sidewalls (114) rising from the floor (112, 212);
a nozzle (120, 220) positioned at least partially in the reservoir (110, 210), wherein the nozzle (120, 220) comprises a flow director (122, 222) pointing toward the floor (112, 212); and
a pump (130) operable to direct liquid agricultural product (90) to the reservoir (110, 210) via the nozzle (120, 220) to thereby cause liquid agricultural product (90) discharged via the nozzle (120, 220) to flow toward the floor (112, 212).

2. The tank (100, 200) of claim 1, wherein a line (123') extending from the nozzle (120, 220) in a discharge direction intersects the floor (112, 212) at an oblique incidence angle (θ120).

3. The tank (100, 200) of claim 2, wherein the oblique incidence angle (θ120) is between 15° and 75°, inclusive.

4. The tank (100, 200) of one of the claims 1 to 3, wherein the floor (112, 212) comprises a sump (113, 213); and
wherein the flow director (122, 222) points toward the sump (113, 213).

5. The tank (100, 200) of one of the claims 1 to 3, wherein the floor (112, 212) comprises an upper level (112') and a sump (113, 213) extending below the upper level (112'); and
wherein the flow director (122, 222) points toward the upper level (112').

6. The tank (100, 200) of one of the claims 1 to 3, wherein the pump is operable to receive liquid agricultural product (90) from the reservoir (110, 210) via a return port (118, 218); and
wherein the flow director (122, 222) points away from the return port (118, 218).

7. The tank (100, 200) of claim 6, wherein the floor (112, 212) comprises a sump (113, 213) defining a lowest area of the floor (112, 212); and
wherein the return port (118, 218) is positioned within the sump (113, 213).

8. The tank (100, 200) of one of the claims 1 to 7, further comprising a propeller (140, 240) operable to induce a flow of liquid agricultural product (90) within the reservoir (110, 210) to thereby promote mixing of the liquid agricultural product (90).

9. The tank (100, 200) of claim 8, wherein the propeller (140, 240) is configured to induce the flow of liquid agricultural product (90) toward the floor (112, 212).

10. The tank (100, 200) of one of the claims 1 to 9, further comprising a pair of propellers (240), each operable to induce a flow of liquid agricultural product (90) toward the floor (212) to thereby promote mixing of the liquid agricultural product (90).

11. The tank (100, 200) of one of the claims 1 to 10, wherein a distance between an outlet of the flow director (122, 222) and the floor (112, 212) is less than 5 cm.

12. A method of promoting mixing in a reservoir (110, 210) holding a liquid agricultural product (90) comprising particulate matter (92), the method comprising a tank (100, 200) of one of the claims 1 to 11, the method further comprising:
discharging liquid agricultural product (90) through the nozzle (120, 220) that points toward the floor (112, 212) of the reservoir (110, 210), thereby causing the discharged liquid agricultural product (90) to strike the floor (112, 212) and discourage settling of particulate matter (92) on the floor (112, 212).

13. The method of claim 12, further comprising operating the propeller (140, 240) within the reservoir (110, 210) to thereby flow liquid downward and toward the floor (112, 212).

14. The method of claim 12 or 13, wherein causing the discharged liquid agricultural product (90) to strike the floor (112, 212) comprises causing the discharged liquid agricultural product (90) to strike the sump (113, 213).

15. The method of one of the claims 12 to 14, further comprising directing liquid agricultural product (90) from the reservoir (110, 210) to the pump (130) via the return port (118, 218) of the reservoir (110, 210); wherein the pump (130) charges liquid agricultural product (90) to the nozzle (120, 220).
